# EUROPEAN PATENT SPECIFICATION

(11) **EP 1 864 069 B1**
(45) Date of publication and mention of the grant of the patent: **14.10.2015**
(21) Application number: 06717036.5
(22) Date of filing: 21.03.2006
(51) Int. Cl.: F28D 9/00, B01D 1/22, C02F 1/08, F28F 3/08, F28D 21/00

(54) **A PLATE HEAT EXCHANGER**
PLATTENWÄRMETAUSCHER
ECHANGEUR DE CHALEUR A PLAQUES

(30) Priority: 01.04.2005 SE 0500728; 29.04.2005 SE 0500978
(43) Date of publication of application: 12.12.2007
(73) Proprietor: Alfa Laval Corporate AB, 221 00 Lund (SE)
(72) Inventor: JOENSEN, Hjalmar, 2300 Köpenhamn (DK); PASSKE, Henning, 2720 Vanlöse (DK); CRONA, Martin, 226 55 Lund (SE); ANDERSEN, Bo Juul, 3060 Espergaerde (DK); BLOMGREN, Ralf, 239 34 Skanör (SE)
(86) International application number: PCT/SE2006/000351
(87) International publication number: WO 2006/104443

(56) References cited:
- EP-A1- 1 085 286
- WO-A1-00/71223
- WO-A1-2004/011868
- WO-A1-2004/070302
- DE-A1- 3 721 132
- DE-T2- 69 627 016
- GB-A- 2 132 327
- JP-A- 2000 292 079
- US-A- 3 150 028
- US-A- 4 763 488
- US-A- 5 333 683
- US-A1- 2004 159 424
- US-B1- 6 536 511

## Description

### THE BACKGROUND OF THE INVENTION AND PRIOR ART

The present invention refers generally to a plate heat exchanger for distillation of a medium. Especially, it is referred to desalination of salt-containing water, such as seawater. More specifically, the present invention refers to a plate heat exchanger for treatment of a medium, comprising a number of compression-moulded heat exchanger plates, which are successively provided in a plate package and which form first plate interspaces for the medium and second plate interspaces, wherein the first plate interspaces and the second plate interspaces are provided in an alternating order in the plate package, see WO 2004/011868.

Equipment for desalination of seawater, where one or several plate packages of heat exchanger plates form the main components in the process, is manufactured since many years. SE-B-464 938 discloses such a desalination plant comprising a plate package provided in a cylindrical container. The heat exchanger plates have no ports for steam, but instead the space outside the heat exchanger plates is used as one or several flow paths for the steam, depending on the kind of process. The container is a substantially cylindrical pressure vessel. In a large plant including several plate packages, these may be located in the longitudinal direction of the cylinder. To a certain extent, the container is limiting for the size of the plant, if not several containers are allowed to be included in the plant.

At least for smaller or medium sized plants, the cost for the container is a large part of the total cost for the plant. The manufacturing and mounting of the container are both complex and time consuming. In addition, maintenance of the plant and cleaning of the heat exchanger plates are difficult, for instance since the plate package and the heat exchanger plates only are accessible after opening of the container.

WO 2004/011868 disclsoes a plate heat exchanger comprising a plurality of heat exchanger plates each defining a heat transfer area and a border area outside the heat transfer area. A curable material is applied to the border area to form a gasket.

DE 696 27 016 discloses a plate heat exchanger comprising a plurality of heat exchanger plates each having a through-going holes for receiving a respective fastening element.

### SUMMARY OF THE INVENTION

The object of the invention is to provide an improved plate heat exchanger for distillation of a medium and especially for desalination of salt-containing water. A further object of the invention is to provide such a plate heat exchanger which is efficient and which can be manufactured in an easy and inexpensive manner. A further object is to provide such a plate heat exchanger which permits an easy maintenance.

This object is achieved by the plate heat exchanger initially defined, which is characterized by the characterizing features of claim 1.

Such a plate heat exchanger thus offers a possibility to perform the whole desired treatment of the medium, for instance desalination of seawater, in the plate package. The plate heat exchanger therefore does not need any container in which the plate package is enclosed. Consequently, a plate heat exchanger is achieved, which is efficient and which can be manufactured in an easy and inexpensive manner. Furthermore, maintenance and cleaning of the plate package and the individual heat exchanger plates are facilitated.

According to a preferred embodiment of the invention, a centre axis extends substantially centrally between two side edges of each heat exchanger plate and substantially vertically when the plate package is disposed in a normal position of use. The centre axis may advantageously extend substantially centrally through the evaporation section, the separation section and the condensation section, wherein the evaporation section is located at the lowermost position and the condensation section at the uppermost position in the normal position of use.

According to the invention, substantially each of the second plate interspaces of the evaporation section forms a heating space, which is closed relatively to the first plate interspaces and relatively to the separation section and the condensation section and arranged to permit through-flowing of a heating medium for heat transfer to the medium flowing in the first plate interspaces of the evaporation section for providing the evaporation. The evaporation section may then be closed by means of a gasket which extends around the evaporation space.

According to a further embodiment of the invention, the evaporation section comprises at least one inlet for the medium, wherein the inlet is formed by an inlet port in substantially each heat exchanger plate in the plate package, which inlet ports form a port channel which is closed relatively to the second plate interspaces and communicates with the first plate interspaces. Advantageously, the port channel of the inlet may be closed relatively to the second plate interspaces by means of an inlet gasket, which extends around the inlet port in each of the second plate interspaces. Furthermore, the port channel of the inlet may communicate with the first plate interspaces via at least a relatively small hole, which is provided between the inlet port and the inlet gasket and extends through every second heat exchanger plate in the plate package from the second plate interspaces to the first plate interspaces. By means of such a relatively small hole, a relatively large pressure drop is achieved, which enables a proper distribution of the medium entering the first plate interspaces in the evaporation section, and in such a way an efficient heating and evaporation of the medium is achieved. The port channel of the inlet may then be closed relatively to the first plate interspaces by means of a further gasket which extends around the inlet port between the hole and the inlet port in each of the first plate interspaces.

According to a further embodiment of the invention, a delimiting gasket is provided in the first plate interspaces and arranged to delimit the evaporation space of the evaporation section and to permit transport of the medium to the separation section.

According to a further embodiment of the invention, each heat exchanger plate comprises at least one communication port, which permits that the medium partly flows from the first interspaces in the evaporation section to the second plate interspaces in the separation section. Furthermore, the separation section may then be arranged to permit flowing of the medium through the first plate interspaces and the second plate interspaces. The first and second plate interspaces thus communicate with each other in the separation section and both these plate interspaces may be used for the flowing of the medium. Consequently the flow velocity is reduced and an efficient catching of liquid droplets may be achieved. Advantageously, the heat exchanger plates in the separation section may be corrugated in such a way that they permit catching of liquid from the medium flowing through the first plate interspaces and the second plate interspaces.

According to a further embodiment of the invention, the separation section is arranged to convey the caught liquid to a liquid outlet for discharge of the caught liquid. Advantageously, the gasket of the evaporation section, which adjoins the separation section, is provided in such a way that the caught liquid flows along the gasket towards the liquid outlet. The gasket of the evaporation section, which adjoins the separation section, may then slope downwardly and outwardly from the centre axis towards the side edges. Furthermore, the delimiting gasket and the gasket of the evaporation section may advantageously together define a lateral passage between these gaskets and the respective side edge, wherein these lateral passages comprise both first and second plate interspaces and are arranged to convey the caught liquid further to the liquid outlet.

According to the invention, substantially each of the second plate interspaces of the condensation section forms a cooling space which is closed relatively to the first plate interspaces and relatively to the separation section and the evaporation section, and is arranged to permit through-flowing of a cooling medium for heat transfer from the medium flowing in the first plate interspaces of the condensation section for providing the condensation. Furthermore, the condensation section comprises at least a medium outlet, wherein the medium outlet is formed by an outlet port in substantially each heat exchanger plate in the plate package, which outlet ports form one of a port channel which extends through substantially the whole plate package.

According to a further embodiment of the invention, substantially each heat exchanger plate in the separation section comprises at least a collection port, which forms a collection channel which extends through substantially the whole plate package and is arranged to convey the medium to the first plate interspaces of the condensation section. Advantageously, substantially each heat exchanger plate in the separation section may comprise at least two collection ports, which form a respective such collection channel, wherein such a collection port is provided in the proximity of each side edge on each heat exchanger plate.

According to a further embodiment of the invention, a guide gasket is provided in each of the first plate interspaces and arranged to delimit the separation section from the condensation section. Advantageously, the guide gasket slopes downwardly towards the port channel of the medium outlet and is arranged to convey the medium condensed in the condensation section to the medium outlet. Furthermore, the medium outlet may be provided in a central position, wherein the guide gasket slopes downwardly to the port channel of the medium outlet from two positions which are located in the proximity of a respective one of said collection ports.

According to a further embodiment of the invention, the plate heat exchanger is designed to convey the medium through the second plate interspaces of the condensation section before the medium is conveyed into the first plate interspaces of the evaporation section, wherein the medium forms the cooling medium.

### BRIEF DESCRIPTION OF THE DRAWINGS

The present invention is now to be explained more closely by means of a description of various embodiments and with reference to the drawings attached hereto.
- Fig. 1: discloses a side view of a plate heat exchanger according to an embodiment of the invention.
- Fig. 2: discloses a plan view of a heat exchanger plate having gaskets in a first plate interspace.
- Fig. 3: discloses a plan view of a heat exchanger plate having gaskets in a second plate interspace.

### DETAILED DESCRIPTION OF VARIOUS EMBODIMENTS OF THE INVENTION

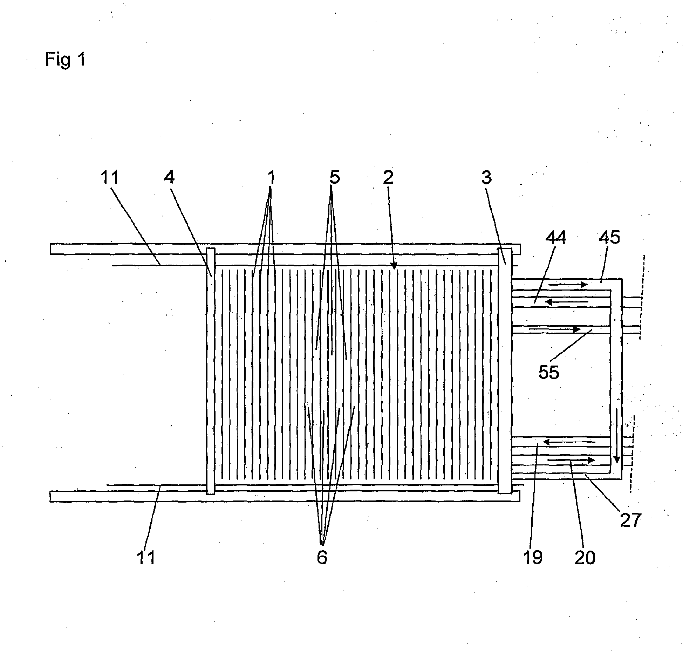

Fig. 1 discloses a plate heat exchanger for treatment of a medium. In the following description an application with respect to desalination of seawater is described. However, it is to be noted that the invention is not limited to this application but may also refer to any other treatment, for instance distillation of a liquid.

The plate heat exchanger comprises a large number of compression-moulded heat exchanger plates 1, which are provided in parallel to each other and successively in such a way that they form a plate package 2. The plate package 2 is provided between a frame plate 3 and a pressure plate 4. Between the heat exchanger plates 1, first plate interspaces 5 and second plate interspaces 6 are formed. The first plate interspaces 5 and the second plate interspaces 6 are provided in an alternating order in the plate package 2 in such a way that substantially each first plate interspace 5 is surrounded by two second plate interspaces 6, and substantially each second plate interspace 6 is surrounded by two first plate interspaces 5. Different sections in the plate package 2 are delimited from each other by means of gaskets in each plate interspace 5, 6, which is to be explained more closely below.

Each heat exchanger plate has two opposite substantially parallel side edges 7, 8, an upper edge 9 and a lower edge 10. A centre axis x extends substantially centrally between the two side edges 7 and 8, and substantially vertically when the plate package 2 is located in a normal position of use.

The plate package 2, i.e. the heat exchanger plates 1 and the gaskets provided therebetween, is kept together by means of schematically indicated tie bolts 11 in a manner known per se.

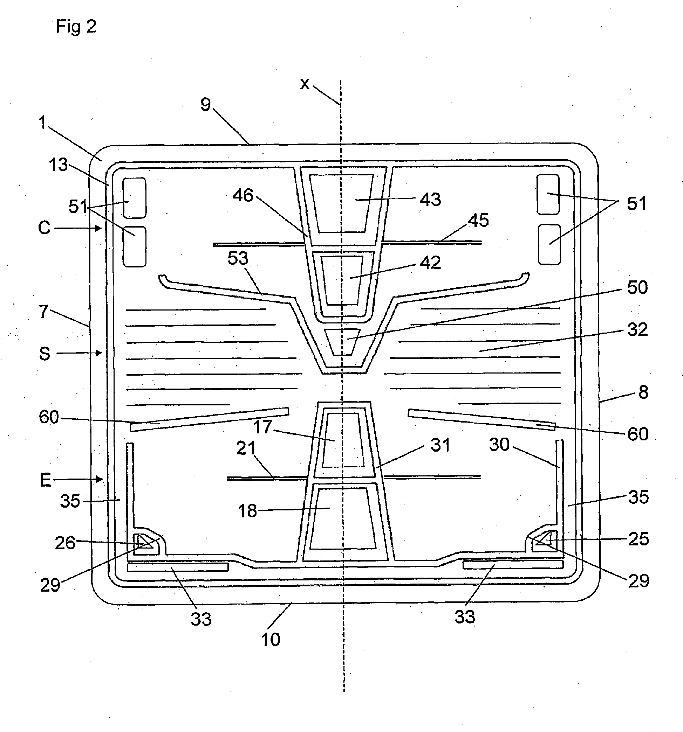

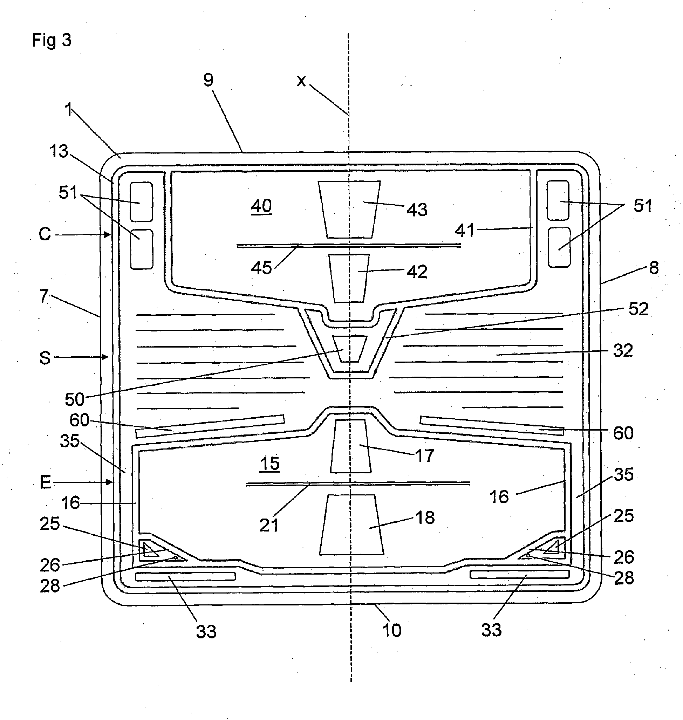

An embodiment of the plate heat exchanger is now to be explained more closely with reference to Figs. 2 and 3, which disclose a respective heat exchanger plate 1. Fig. 2 discloses one side of a heat exchanger plate 1, which faces one of the first plate interspaces 5 substantially arranged to form a passage for the medium to be treated; in this case seawater to be desalinated. Fig. 3 discloses a side of a heat exchanger plate 1, which faces one of the second plate interspaces 6.

The plate package 2 encloses an evaporation section E, a separation section S and a condensation section C. The evaporation section E is arranged to permit evaporation of at least a part of the medium flowing through the first plate interspaces 5. The separation section S is arranged to separate non-evaporated liquid from the evaporated part of the medium. The condensation section C is arranged to condense the evaporated part flowing through the first plate interspaces 5. The centre axis x extends substantially centrally through the evaporation section E, the separation section S and the condensation section C. As can be seen in Figs. 2 and 3, the evaporation section E is located at a lowermost position, the condensation section C at an uppermost position and the separation section S between the evaporation section E and the condensation section C when the plate heat exchanger is in the normal position of use.

In each of the first plate interspaces 5 and the second plate interspaces 6, there is a main gasket 13 extending around the evaporation section E, the separation section S and the condensation section C in the proximity of the edges 7, 8, 9 and 10.

Substantially each of the second plate interspaces 6 of the evaporation section E forms a heating space 15, which is closed relatively to the first plate interspaces 5 and relatively to the separation section S and the condensation section C by means of a gasket 16, which extends around the heating space 15. The heating space 15 is arranged to permit through-flowing of a heating medium for heat transfer to the medium flowing in the first plate interspaces 5 of the evaporation section E for providing the evaporation. Each heat exchanger plate 1 comprises an inlet port 17 and outlet port 18, which are located in the heating space 15 inside the gasket 16 and form an inlet port channel and an outlet port channel, respectively, for the heating medium. The inlet port channel and the outlet port channel are connected to an external inlet conduit 19 and an external outlet conduit 20, respectively, for the heating medium, see Fig. 1. Between the inlet port 17 and the outlet port 18, each heat exchanger plate 1 has a corrugation 21, which is turned inwardly into the heating space 15 and forms a barrier guiding the heating medium up-wardly towards the side edges 7, 8 from the inlet port 17 in such a way that the surface of the whole heating space 15 may be utilized.

The evaporation section E comprises at least one inlet for the medium. In the embodiment disclosed, the evaporation E comprises two inlets, which are formed by two inlet ports 25 in each heat exchanger plate 1 in the plate package 2. The inlet ports 25 form a respective port channel, which is closed relatively to the second plate interspaces 6 and communicate with the first plate interspaces 5. The port channels of the inlet are closed relatively to the second plate interspaces 6 by means of a respective inlet gasket 26, which extends around the respective inlet port 25 in each of the second plate interspaces 6 and which is a part of the gasket 16. The port channels of the inlet are connected to a respective inlet conduit 27, see Fig. 1. The port channels of the inlet communicate with the first plate interspaces 5 via a respective relatively small hole 28, which is disclosed in Fig. 3 and provided between the respective inlet port 26 and the respective inlet gasket 26. The holes 28 extend through every second heat exchanger plate 1 in the plate package from the second plate interspaces 6 to the first plate interspaces 5. The port channels of the inlet are also closed relatively to the first plate interspaces 5 by means of a further gasket 29, which extends around the respective inlet port 25 between the respective hole 28 and the respective inlet port 25 in each of the first plate interspaces 5.

A delimiting gasket 30 is provided in each of the first plate interspaces 5 and arranged to delimit the evaporation space for the medium in the evaporation section E and to convey the medium to the separation section S. The delimiting gasket 30 thus extends partly around the evaporation space in the first plate interspaces 5 at a small distance from the surrounding main gasket 13. The delimiting gasket 30 also comprises a gasket portion 31, which extends around each of the inlet port 17 and the outlet port 18 in order to seal these against each other and against the evaporation space in the first plate interspaces 5.

The delimiting gasket 30 is open along its upper end so that the evaporated medium may flow upwardly in the separation section S. Furthermore, each heat exchanger plate 1 has at least one or two, as in the example disclosed, communication ports 60. The communication ports 60 are provided in a lower part of the separation section S immediately above the gasket 16. The communication ports 60 are arranged to permit that a part of the evaporated medium flows from the first plate interspaces 5 into the second plate interspaces 6, wherein the separation section S is arranged to permit flowing of the medium through both first plate interspaces 5 and the second plate interspaces 6. The heat exchanger plates 1 is in the separation section S corrugated with a corrugation 32 of ridges and valleys in such a way that they permit catching of a liquid from the medium flowing through the first plate interspaces 5 and the second plate interspaces 6. The corrugation 32, i.e. the ridges and valleys of the corrugation, extends in the embodiment disclosed transversally to the centre axis x, preferably substantially perpendicularly to the centre axis x.

The separation section S is also arranged to convey the caught liquid to the two liquid outlets 33 for discharge of the caught liquid. The gasket 16 mentioned above of the evaporation section E in the first plate interspaces 5 adjoins the separation section S and is provided in such way that the liquid, which is caught in the separation section S, flows along the gasket 16 towards the liquid outlets 33. In the embodiment disclosed, these gaskets 16 slope downwardly and outwardly from the centre axis x towards the side edges 7 and 8. The delimiting gasket 30 and the gasket 16 are provided and located in such a way that they together define a lateral passage 35 between these gaskets 30, 16 and the respective side edge 7 and 8, and more specifically between these gaskets 30, 16 and the main gasket 13. These lateral passages 35 thus extend through both the first plate interspaces 5 and the second plate interspaces 6. The lateral passages 35 are arranged to convey the caught liquid further from the separation section S proper to the liquid outlets 33, which are located beneath the heating area 15 and the evaporation section E. As can be seen in Figs. 2 and 3, the liquid outlets are located above the lower edge 10 and the lower part of the main gasket 13 and beneath a lower part of the delimiting gasket 30 and the gasket 16.

Substantially each of the second plate interspaces 6 of the condensation section C forms a cooling space 40, which is closed relatively to the first plate interspaces 5 and relatively to the separation section S and the evaporation section E by means of a gasket 41, which extends around the cooling space 40. The cooling space 40 is arranged to permit through-flowing of a cooling medium for heat transfer from the medium flowing in the first plate interspaces 5 of the condensation section C for providing the condensation. Each heat exchanger plate 1 comprise an inlet port 42 and an outlet port 43, which are located in the cooling space 40 inside the gasket 41 and form an inlet port channel and an outlet port channel, respectively, for the cooling medium. The inlet port channel and the outlet port channel are connected to an external inlet conduit 44 and an external outlet conduit 45, respectively, for cooling, see Fig. 1. Between the inlet port 42 and the outlet port 43, each heat exchanger plate 1 has a corrugation 45 which is turned inwardly into the cooling space 40 and forms a barrier guiding the cooling medium outwardly towards the side edges 7, 8 from the inlet port 42 in such a way that the whole surface of the cooling space 40 may be utilized for the condensation of the medium.

The main gasket 13 in the first plate interspaces 5 also comprises a gasket portion 46, which extends around each of the inlet port 42 and the outlet port 43 for sealing these against each other and against the condensation space in the first plate interspaces 5.

The condensation section C comprises at least one medium outlet, which is formed by an outlet port 50 in substantially each heat exchanger plate 1 in the plate package 2. The outlet ports 50 form one of a port channel extending through substantially the whole plate package 2 and are connected to a discharge channel 55 for discharging the condensed medium, i.e. in the example disclosed, the desalinated seawater is discharged as fresh water. Furthermore, substantially each heat exchanger plate 1 comprises in an upper part of the separation section S two collection ports 51 in the proximity of each side edge 7, 8. These collection ports 51 form four collection channels, which extend through substantially the whole plate package 2 and are arranged to convey the medium from the second plate interspaces 6 of the separation section S into the first plate interspaces 5 of the condensation section C.

The outlet port 50 is closed relatively to the second plate interspaces 6 by means of an outlet gasket 52 in each of the second plate interspaces 6. Each such outlet gasket 52 extends around the outlet port 50 in the respective second plate interspace 6. The outlet gasket 52 coincides partly with the gasket 41 of the cooling space 40.

A guide gasket 53 is provided in each of the first plate interspaces 5 and arranged to delimit the separation section S from the condensation section C. The guide gasket 53 slopes downwardly towards the outlet port 50 and the port channel of the medium outlet and is arranged to convey the medium condensed in the condensation section C to the medium outlet. The medium outlet is provided in a central position, wherein the guide gasket 53 slopes downwardly towards the outlet port 50 from two positions, which are located in the proximity of the collection ports 51 at each side edge 7, 8. As can be seen in Fig. 2, the guide gasket 53 extends beneath the outlet port 50. The guide gasket 53 also has the function to guide the medium in the separation section S outwardly towards the collection ports 51.

As can be seen in Fig. 1, the plate heat exchanger is designed to convey the medium, i.e. the seawater, through the second plate interspaces 6 of the condensation section C before the medium is conveyed into the first plate interspaces 5 of the evaporation section E in such a way that the medium forms the cooling medium in the condensation section C, i.e. the outlet conduit 45 from the cooling space 40 is connected to the two inlet conduits 27.

The invention is not limited to the embodiments disclosed but may be varied and modified within the scope of the following claims.

It is to be noted for instance that the different sections can be located in another manner in the plate package than the one disclosed. The evaporation section may for instance be located in the proximity of a lower corner of the plate package, the separation section in the upper part of the plate package and the condensation section in the other lower corner of the plate package. It is also to be noted that all heat exchanger plates 1 are substantially identical except for the relatively small holes 28, which merely are made in every second heat exchanger plate 1. In connection with the mounting of the plate package 2, every second plate is turned around the centre axis x in a manner known per se.

## Claims

1. A plate heat exchanger for treatment of a medium, comprising a number of compression-moulded heat exchanger plates (1), which are successively provided in a plate package (2) and which form first plate interspaces (5) for the medium and second plate interspaces (6), wherein the first plate interspaces (5) and the second plate interspaces (6) are provided in an alternating order in the plate package (2),
**characterized in that** the plate package (2) encloses an evaporation section, a separation section and a condensation section, wherein
the evaporation section is arranged to permit evaporation of at least a part of the medium flowing through the first plate interspaces,
the separation section is arranged to separate non-evaporated liquid from the evaporated part of the medium,
the condensation section is arranged to condense the evaporated part flowing through the first plate interspaces, and
the evaporation section, the separation section and the condensation section are provided in such a way that said evaporation, said separation and said condensation are permitted in each of the first interspaces,
that substantially each of the second plate interspaces (6) of the evaporation section (E) forms a heating space (15), which is closed relatively to the first plate interspaces (5) and relatively to the separation section (S) and the condensation section (C) and arranged to permit through-flowing of a heating medium for heat transfer to the medium flowing in the first plate interspaces (5) of the evaporation section (E) for providing the evaporation, and
that substantially each of the second plate interspaces (6) of the condensation section (C) forms a cooling space (40) which is closed relatively to the first plate interspaces (5) and relatively to the separation section (S) and the evaporation section (E), and is arranged to permit through-flowing of a cooling medium for heat transfer from the medium flowing in the first plate interspaces (5) of the condensation section (C) for providing the condensation.

2. A plate heat exchanger according to claim 1, **characterized in that** a centre axis (x) extends substantially centrally between two side edges (7) of each heat exchanger plate (1) and substantially vertically when the plate package (2) is disposed in a normal position of use.

3. A plate heat exchanger according to claim 2, **characterized in that** the centre axis (x) extends substantially centrally through the evaporation section (E), the separation section (S) and the condensation section (C), wherein the evaporation section (E) is located at the lowermost position and the condensation section (C) at the uppermost position in the normal position of use.

4. A plate heat exchanger according to any one of the preceding claims, **characterized in that** the heating space (15) is closed by means of a gasket (16) which extends around the evaporation space (15).

5. A plate heat exchanger according to any one of the preceding claims, **characterized in that** the evaporation section (E) comprises at least one inlet for the medium, wherein the inlet is formed by an inlet port (25) in substantially each heat exchanger plate (1) in the plate package (2), which inlet ports (25) form a port channel which is closed relatively to the second plate interspaces (6) and communicates with the first plate interspaces (5).

6. A plate heat exchanger according to claim 5, **characterized in that** the port channel of the inlet is closed relatively to the second plate interspaces (6) by means of an inlet gasket (26), which extends around the inlet port (25) in each of the second plate interspaces (6).

7. A plate heat exchanger according claims 5 and 6, **characterized in that** the port channel of the inlet communicates with the first plate interspaces (5) via at least a relatively small hole (28), which is provided between the inlet port (25) and the inlet gasket (26) and extends through every second heat exchanger plate (1) in the plate package (2) from the second plate interspaces (6) to the first plate interspaces (5).

8. A plate heat exchanger according to claim 7, **characterized in that** the port channel of the inlet is closed relatively to the first plate interspaces (5) by means of a further gasket which extends around the inlet port (25) between the hole (28) and the inlet port (25) in each of the first plate interspaces (5).

9. A plate heat exchanger according to any one of the preceding claims, **characterized in that** a delimiting gasket (30) is provided in the first plate interspaces (5) and arranged to delimit the evaporation space of the medium in the first evaporation section (E) and to permit transport of the medium to the separation section (S).

10. A plate heat exchanger according to any one of the preceding claims, **characterized in that** each heat exchanger plate (1) comprises at least one communication port (60), which permits that the medium partly flows from the first plate interspaces (5) in the evaporation section (E) to the second plate interspaces (6) in the separation section (S).

11. A plate heat exchanger according to any one of the preceding claims, **characterized in that** the separation section (S) is arranged to permit flowing of the medium through the first plate interspaces (5) and the second plate interspaces (6).

12. A plate heat exchanger according to claim 11, **characterized in that** the heat exchanger plates (1) in the separation section (S) are corrugated in such a way that they permit catching of liquid from the medium flowing through the first plate interspaces (5) and the second plate interspaces (6).

13. A plate heat exchanger according to claim 12, **characterized in that** the separation section (S) is arranged to convey the caught liquid to a liquid outlet (33) for discharge of the caught liquid.

14. A plate heat exchanger according to claims 4 and 13, **characterized in that** the gasket (16) of the evaporation section (E) which adjoins the separation section (S), is provided in such a way that the caught liquid flows along the gasket (16) towards the liquid outlet (33).

15. A plate heat exchanger according to claims 3 and 14, **characterized in that** the gasket (16) of the evaporation section (E) which adjoins the separation section (S), slopes downwardly and outwardly from the centre axis (x) towards the side edges (7, 8).

16. A plate heat exchanger according claims 2, 4 and 15, **characterized in that** the delimiting gasket (30) and the gasket (16) of the evaporation section (E) together define a lateral passage (35) between these gaskets and the respective side edge (7, 8), wherein these lateral passages (35) comprise both the first and second plate interspaces (5, 6) and are arranged to convey the caught liquid further to the liquid outlet (33).

17. A plate heat exchanger according to any one of the preceding claims, **characterized in that** the condensation section (C) comprises at least a medium outlet, wherein the medium outlet is formed by an outlet port (50) in substantially each heat exchanger plate (1) in the plate package (2), which outlet ports (50) form one of a port channel which extends through substantially the whole plate package (2).

18. A plate heat exchanger according to any one of the preceding claims, **characterized in that** substantially each heat exchanger plate (1) in the separation section (S) comprises at least a collection port (51), which forms a collection channel which extends through substantially the whole plate package (2) and is arranged to convey the medium to the first plate interspaces (5) of the condensation section (C).

19. A plate heat exchanger according to claims 2 and 18, **characterized in that** substantially each heat exchanger plate (1) in the separation section (S) comprises at least two collection ports (51), which form a respective such collection channel, wherein such a collection port (51) is provided in the proximity of each side edge (7, 8) on each heat exchanger plate (1).

20. A plate heat exchanger according to any one of the preceding claims, **characterized in that** a guide gasket (53) is provided in each of the first plate interspaces (5) and arranged to delimit the separation section (S) from the condensation section (C).

21. A plate heat exchanger according to claims 17 and 20, **characterized in that** the guide gasket (53) slopes downwardly towards the port channel of the medium outlet and is arranged to convey the medium condensed in the condensation section (C) to the medium outlet.

22. A plate heat exchanger according to claims 19 and 21, **characterized in that** the medium outlet is provided in a central position, wherein the guide gasket (53) slopes downwardly to the port channel of the medium outlet from two positions which are located in the proximity of a respective one of said collection ports (51).

23. A plate heat exchanger according to any one of the preceding claims, **characterized in that** the plate heat exchanger is designed to convey the medium through the second plate interspaces (6) of the condensation section (C) before the medium is conveyed into the first plate interspaces (5) of the evaporation section (E), wherein the medium forms the cooling medium.

## Patentansprüche

1. Plattenwärmetauscher zur Behandlung eines Mediums, der eine Anzahl von formgepressten Wärmetauscherplatten (1) umfasst, die aufeinanderfolgend in einem Plattenpaket (2) bereitgestellt werden und die erste Plattenzwischenräume (5) für das Medium und zweite Plattenzwischenräume (6) bilden, wobei die ersten Plattenzwischenräume (5) und die zweiten Plattenzwischenräume (6) in dem Plattenpaket (2) in abwechselnder Reihenfolge bereitgestellt werden,
**dadurch gekennzeichnet, dass** das Plattenpaket (2) eine Verdampfungssektion, eine Abscheidungssektion und eine Kondensationssektion umschließt, wobei
die Verdampfungssektion dafür angeordnet ist, ein Verdampfen wenigstens eines Teils des Mediums, das durch die ersten Plattenzwischenräume strömt, zu ermöglichen,
die Abscheidungssektion dafür angeordnet ist, nicht-verdampfte Flüssigkeit von dem verdampften Teil des Mediums abzuscheiden,
die Kondensationssektion dafür angeordnet ist, den verdampften Teil, der durch die ersten Plattenzwischenräume strömt, zu kondensieren, und
die Verdampfungssektion, die Abscheidungssektion und die Kondensationssektion auf eine solche Weise bereitgestellt werden, dass die Verdampfung, die Abscheidung und die Kondensation in jedem der ersten Plattenzwischenräume ermöglicht werden,
dass im Wesentlichen jeder der zweiten Plattenzwischenräume (6) der Verdampfungssektion (E) einen Heizungsraum (15) bildet, der im Verhältnis zu den ersten Plattenzwischenräumen (5) und im Verhältnis zu der Abscheidungssektion (S) und der Kondensationssektion (C) geschlossen und dafür angeordnet ist, ein Durchströmen eines Heizmediums für eine Wärmeübertragung zu dem in den ersten Plattenzwischenräumen (5) der Verdampfungssektion (E) strömenden Medium zu ermöglichen, um die Verdampfung zu gewährleisten, und
dass im Wesentlichen jeder der zweiten Plattenzwischenräume (6) der Kondensationssektion (C) einen Kühlungsraum (40) bildet, der im Verhältnis zu den ersten Plattenzwischenräumen (5) und im Verhältnis zu der Abscheidungssektion (S) und der Verdampfungssektion (E) geschlossen und dafür angeordnet ist, ein Durchströmen eines Kühlmediums für eine Wärmeübertragung von dem in den ersten Plattenzwischenräumen (5) der Kondensationssektion (C) strömenden Medium zu ermöglichen, um die Kondensation zu gewährleisten.

2. Plattenwärmetauscher nach Anspruch 1, **dadurch gekennzeichnet, dass** sich eine Mittelachse (x) im Wesentlichen mittig zwischen zwei Seitenkanten (7) jeder Wärmetauscherplatte (1) und im Wesentlichen in Vertikalrichtung erstreckt, wenn das Plattenpaket (2) in einer normalen Verwendungsposition angeordnet ist.

3. Plattenwärmetauscher nach Anspruch 2, **dadurch gekennzeichnet, dass** sich die Mittelachse (x) im Wesentlichen mittig durch die Verdampfungssektion (E), die Abscheidungssektion (S) und die Kondensationssektion (C) erstreckt, wobei in der normalen Verwendungsposition die Verdampfungssektion (E) an der untersten Position und die Kondensationssektion (C) an der obersten Position angeordnet sind.

4. Plattenwärmetauscher nach einem der vorhergehenden Ansprüche, **dadurch gekennzeichnet, dass** der Heizungsraum (15) mit Hilfe einer Dichtung (16), die sich um den Verdampfungsraum (15) erstreckt, geschlossen ist.

5. Plattenwärmetauscher nach einem der vorhergehenden Ansprüche, **dadurch gekennzeichnet, dass** die Verdampfungssektion (E) wenigstens einen Einlass für das Medium umfasst, wobei der Einlass durch eine Einlassöffnung (25) in im Wesentlichen jeder Wärmetauscherplatte (1) in dem Plattenpaket (2) gebildet wird, wobei die Einlassöffnungen (25) einen Öffnungskanal bilden, der im Verhältnis zu den zweiten Plattenzwischenräumen (6) geschlossen ist und in Verbindung mit den ersten Plattenzwischenräumen (5) steht.

6. Plattenwärmetauscher nach Anspruch 5, **dadurch gekennzeichnet, dass** der Öffnungskanal des Einlasses mit Hilfe einer Einlassdichtung (26), die sich in jedem der zweiten Plattenzwischenräume (6) um die Einlassöffnung (25) erstreckt, im Verhältnis zu den zweiten Plattenzwischenräumen (6) geschlossen ist.

7. Plattenwärmetauscher nach Anspruch 5 und 6, **dadurch gekennzeichnet, dass** der Öffnungskanal des Einlasses über wenigstens ein verhältnismäßig kleines Loch (28), das zwischen dem Einlassöffnung (25) und der Einlassdichtung (26) bereitgestellt wird und sich durch jede zweite Wärmetauscherplatte (1) in dem Plattenpaket (2) von den zweiten Plattenzwischenräumen (6) zu den ersten Plattenzwischenräumen (5) erstreckt, in Verbindung mit den ersten Plattenzwischenräumen (5) steht.

8. Plattenwärmetauscher nach Anspruch 7, **dadurch gekennzeichnet, dass** der Öffnungskanal des Einlasses mit Hilfe einer weiteren Dichtung, die sich zwischen dem Loch (28) und der Einlassöffnung (25) in jedem der ersten Plattenzwischenräume (5) um die Einlassöffnung (25) erstreckt, im Verhältnis zu den ersten Plattenzwischenräumen (5) geschlossen ist.

9. Plattenwärmetauscher nach einem der vorhergehenden Ansprüche, **dadurch gekennzeichnet, dass** eine Abgrenzungsdichtung (30) in den ersten Plattenzwischenräumen (5) bereitgestellt wird und dafür angeordnet ist, den Verdampfungsraum des Mediums in der ersten Verdampfungssektion (E) abzugrenzen und einen Transport des Mediums zu der Abscheidungssektion (S) zu ermöglichen.

10. Plattenwärmetauscher nach einem der vorhergehenden Ansprüche, **dadurch gekennzeichnet, dass** jede Wärmetauscherplatte (1) wenigstens eine Verbindungsöffnung (60) umfasst, die es ermöglicht, dass das Medium teilweise von den ersten Plattenzwischenräumen (5) in der Verdampfungssektion (E) zu den zweiten Plattenzwischenräumen (6) in der Abscheidungssektion (S) strömt.

11. Plattenwärmetauscher nach einem der vorhergehenden Ansprüche, **dadurch gekennzeichnet, dass** die Abscheidungssektion (S) dafür angeordnet ist, ein Strömen des Mediums durch die ersten Plattenzwischenräume (5) und die zweiten Plattenzwischenräume (6) zu ermöglichen.

12. Plattenwärmetauscher nach Anspruch 11, **dadurch gekennzeichnet, dass** die Wärmetauscherplatten (1) in der Abscheidungssektion (S) auf eine solche Weise gewellt sind, dass sie ein Auffangen von Flüssigkeit aus dem durch die ersten Plattenzwischenräume (5) und die zweiten Plattenzwischenräume (6) strömenden Medium ermöglichen.

13. Plattenwärmetauscher nach Anspruch 12, **dadurch gekennzeichnet, dass** die Abscheidungssektion (S) dafür angeordnet ist, die aufgefangene Flüssigkeit zu einem Flüssigkeitsauslass (33) zur Abgabe der aufgefangenen Flüssigkeit zu befördern.

14. Plattenwärmetauscher nach Anspruch 4 und 13, **dadurch gekennzeichnet, dass** die Dichtung (16) der Verdampfungssektion (E), die an die Abscheidungssektion (S) anstößt, auf eine solche Weise bereitgestellt wird, dass die aufgefangene Flüssigkeit entlang der Dichtung (16) zu dem Flüssigkeitsauslass (33) hin strömt.

15. Plattenwärmetauscher nach Anspruch 3 und 14, **dadurch gekennzeichnet, dass** die Dichtung (16) der Verdampfungssektion (E), die an die Abscheidungssektion (S) anstößt, von der Mittelachse (x) zu den Seitenkanten (7, 8) hin nach unten und nach außen abfällt.

16. Plattenwärmetauscher nach Anspruch 2, 4 und 15, **dadurch gekennzeichnet, dass** die Abgrenzungsdichtung (30) und die Dichtung (16) der Verdampfungssektion (E) zusammen einen seitlichen Durchgang zwischen diesen Dichtungen und der jeweiligen Seitenkane (7, 8) definieren, wobei diese seitlichen Durchgänge (35) die sowohl die ersten als auch die zweiten Plattenzwischenräume (5, 6) umfassen und dafür angeordnet sind, die die aufgefangene Flüssigkeit weiter zu dem Flüssigkeitsauslass (33) zu befördern.

17. Plattenwärmetauscher nach einem der vorhergehenden Ansprüche, **dadurch gekennzeichnet, dass** die Kondensationssektion (C) wenigstens einen Medienauslass umfasst, wobei der Medienauslass durch eine Auslassöffnung (50) in im Wesentlichen jeder Wärmetauscherplatte (1) in dem Plattenpaket (2) gebildet wird, wobei die Auslassöffnungen (50) einen von einem Öffnungskanal bilden, der sich durch im Wesentlichen das gesamte Plattenpaket (2) erstreckt.

18. Plattenwärmetauscher nach einem der vorhergehenden Ansprüche, **dadurch gekennzeichnet, dass** im Wesentlichen jede Wärmetauscherplatte (1) in der Abscheidungssektion (S) wenigstens eine Sammelöffnung (51) umfasst, die einen Sammelkanal bildet, der sich durch im Wesentlichen das gesamte Plattenpaket (2) erstreckt und dafür angeordnet ist, das Medium zu den ersten Plattenzwischenräumen (5) der Kondensationssektion (C) zu befördern.

19. Plattenwärmetauscher nach Anspruch 2 und 18, **dadurch gekennzeichnet, dass** im Wesentlichen jede Wärmetauscherplatte (1) in der Abscheidungssektion (S) wenigstens zwei Sammelöffnungen (51) umfasst, die einen jeweiligen Sammelkanal bilden, wobei eine solche Sammelöffnung (51) an jeder Wärmetauscherplatte (1) in der Nähe jeder Seitenkante (7, 8) bereitgestellt wird.

20. Plattenwärmetauscher nach einem der vorhergehenden Ansprüche, **dadurch gekennzeichnet, dass** eine Führungsdichtung (53) in jedem der ersten Plattenzwischenräume (5) bereitgestellt wird und dafür angeordnet ist, die Abscheidungssektion (S) von der Kondensationssektion (C) abzugrenzen.

21. Plattenwärmetauscher nach Anspruch 17 und 20, **dadurch gekennzeichnet, dass** die Führungsdichtung (53) zu dem Öffnungskanal des Medienauslasses hin nach unten abfällt und dafür angeordnet ist, das in der Kondensationssektion (C) kondensierte Medium zu dem Medienauslass zu befördern.

22. Plattenwärmetauscher nach Anspruch 19 und 21, **dadurch gekennzeichnet, dass** der Medienauslass in einer mittigen Position bereitgestellt wird, wobei die Führungsdichtung (53) von zwei Positionen aus, die in der Nähe einer jeweiligen der Sammelöffnungen (51) angeordnet sind, zu dem Öffnungskanal des Medienauslasses hin nach unten abfällt.

23. Plattenwärmetauscher nach einem der vorhergehenden Ansprüche, **dadurch gekennzeichnet, dass** der Plattenwärmetauscher dafür ausgelegt ist, das Medium durch die zweiten Plattenzwischenräume (6) der Kondensationssektion (C) zu befördern, bevor das Medium in die ersten Plattenzwischenräume (5) der Verdampfungssektion (E) befördert wird, wobei das Medium das Kühlmedium bildet.

## Revendications

1. Échangeur de chaleur à plaques pour le traitement d'un milieu, comprenant un certain nombre de plaques d'échangeur de chaleur (1) moulées par compression, qui sont prévues successivement dans un ensemble de plaques (2) en créant des premiers interstices entre plaques (5) pour le milieu et des seconds interstices entre plaques (6), dans lequel les premiers interstices entre plaques (5) et les seconds interstices entre plaques (6) sont prévus en s'alternant au sein de l'ensemble de plaques (2),
**caractérisé en ce que** l'ensemble de plaques (2) circonscrit une section d'évaporation, une section de séparation et une section de condensation, dans lesquelles
la section d'évaporation est agencée pour permettre l'évaporation d'au moins une portion du milieu s'écoulant par les premiers interstices entre plaques,
la section de séparation est agencée pour effectuer la séparation entre le liquide non évaporé et la portion évaporée du milieu,
la section de condensation est agencée pour condenser la portion évaporée s'écoulant par les premiers interstices entre plaques, et
la section d'évaporation, la section de séparation et la section de condensation sont prévues de telle manière que ladite évaporation, ladite séparation et ladite condensation sont permises dans chacun des premiers interstices,
**en ce que** sensiblement chacun des seconds interstices entre plaques (6) de la section d'évaporation (E) forme un espace de chauffage (15) qui est fermé relativement aux premiers interstices entre plaques (5) et relativement à la section de séparation (S) et à la section de condensation (C) et est agencé pour permettre la traversée d'un milieu caloporteur destiné au transfert de chaleur à destination du milieu s'écoulant dans les premiers interstices entre plaques (5) de la section d'évaporation (E) à des fins d'évaporation, et
**en ce que** sensiblement chacun des seconds interstices entre plaques (6) de la section de condensation (C) forme un espace de refroidissement (40) qui est fermé relativement aux premiers interstices entre plaques (5) et relativement à la section de séparation (S) et à la section d'évaporation (E) et est agencé pour permettre la traversée d'un milieu de refroidissement destiné au transfert de la chaleur issue du milieu s'écoulant dans les premiers interstices entre plaques (5) de la section de condensation (C) à des fins de condensation.

2. Échangeur de chaleur à plaques selon la revendication 1, **caractérisé en ce qu'**un axe central (x) s'étend de manière sensiblement centrale entre deux bords latéraux (7) de chaque plaque d'échangeur de chaleur (1) et de manière sensiblement verticale lorsque l'ensemble de plaques (2) est disposé dans une position normale d'utilisation.

3. Échangeur de chaleur à plaques selon la revendication 2, **caractérisé en ce que** l'axe central (x) s'étend de manière sensiblement centrale à travers la section d'évaporation (E), la section de séparation (S) et la section de condensation (C), la section d'évaporation (E) étant située à la position la plus basse et la section de condensation (C) à la position la plus haute dans la position normale d'utilisation.

4. Échangeur de chaleur à plaques selon l'une quelconque des revendications précédentes, **caractérisé en ce que** l'espace de chauffage (15) est fermé au moyen d'un joint (16) qui s'étend autour de l'espace d'évaporation (15).

5. Échangeur de chaleur à plaques selon l'une quelconque des revendications précédentes, **caractérisé en ce que** la section d'évaporation (E) comprend au moins une entrée destinée au milieu, l'entrée étant formée par un orifice d'entrée (25) dans sensiblement chaque plaque d'échangeur de chaleur (1) de l'ensemble de plaques (2), lesquels orifices d'entrée (25) forment un canal composé d'orifices qui est fermé relativement aux seconds interstices entre plaques (6) et qui communique avec les premiers interstices entre plaques (5).

6. Échangeur de chaleur à plaques selon la revendication 5, **caractérisé en ce que** le canal composé d'orifices de l'entrée est fermé relativement aux seconds interstices entre plaques (6) au moyen d'un joint d'entrée (26), lequel s'étend autour de l'orifice d'entrée (25) dans chacun des seconds interstices entre plaques (6).

7. Échangeur de chaleur à plaques selon les revendications 5 et 6, **caractérisé en ce que** le canal composé d'orifices de l'entrée communique avec les premiers interstices entre plaques (5) au moins par un trou (28) relativement petit, lequel est prévu entre l'orifice d'entrée (25) et le joint d'entrée (26) et traverse une plaque d'échangeur de chaleur (1) sur deux au sein de l'ensemble de plaques (2), depuis les seconds interstices entre plaques (6) jusqu'aux premiers interstices entre plaques (5).

8. Échangeur de chaleur à plaques selon la revendication 7, **caractérisé en ce que** le canal composé d'orifices de l'entrée est fermé relativement aux premiers interstices entre plaques (5) au moyen d'un joint supplémentaire qui s'étend autour de l'orifice d'entrée (25) entre le trou (28) et l'orifice d'entrée (25) dans chacun des premiers interstices entre plaques (5).

9. Échangeur de chaleur à plaques selon l'une quelconque des revendications précédentes, **caractérisé en ce qu'**un joint de délimitation (30) est prévu dans les premiers interstices entre plaques (5) et est agencé pour délimiter l'espace d'évaporation du milieu de la première section d'évaporation (E) et pour permettre le transport du milieu vers la section de séparation (S).

10. Échangeur de chaleur à plaques selon l'une quelconque des revendications précédentes, **caractérisé en ce que** chaque plaque d'échangeur de chaleur (1) comprend au moins un orifice de communication (60), lequel permet que le milieu s'écoule partiellement depuis les premiers interstices entre plaques (5) de la section d'évaporation (E) vers les seconds interstices entre plaques (6) de la section de séparation (S).

11. Échangeur de chaleur à plaques selon l'une quelconque des revendications précédentes, **caractérisé en ce que** la section de séparation (S) est agencée pour permettre l'écoulement du milieu par les premiers interstices entre plaques (5) et les seconds interstices entre plaques (6).

12. Échangeur de chaleur à plaques selon la revendication 11, **caractérisé en ce que** les plaques d'échangeur de chaleur (1), dans la section de séparation (S), sont ondulées de manière à permettre le recueil du liquide issu du milieu s'écoulant par les premiers interstices entre plaques (5) et les seconds interstices entre plaques (6).

13. Échangeur de chaleur à plaques selon la revendication 12, **caractérisé en ce que** la section de séparation (S) est agencée pour apporter le liquide recueilli à une sortie de liquide (33) permettant l'évacuation du liquide recueilli.

14. Échangeur de chaleur à plaques selon les revendications 4 et 13, **caractérisé en ce que** le joint (16) de la section d'évaporation (E), qui est contigu à la section de séparation (S), est prévu de manière que le liquide recueilli s'écoule le long du joint (16) vers la sortie de liquide (33).

15. Échangeur de chaleur à plaques selon les revendications 3 et 14, **caractérisé en ce que** le joint (16) de la section d'évaporation (E), qui est contigu à la section de séparation (S), est en pente dirigée vers le bas et vers l'extérieur en partant de l'axe central (x) en direction des bords latéraux (7, 8).

16. Échangeur de chaleur à plaques selon les revendications 2, 4 et 15, **caractérisé en ce que** le joint de délimitation (30) et le joint (16) de la section d'évaporation (E) définissent ensemble un passage latéral (35) entre ces joints et le bord latéral respectif (7, 8), ces passages latéraux (35) comprenant les premiers et les seconds interstices entre plaques (5, 6) et étant agencés pour apporter le liquide récupéré, vers la sortie de liquide (33).

17. Échangeur de chaleur à plaques selon l'une quelconque des revendications précédentes, **caractérisé en ce que** la section de condensation (C) comprend au moins une sortie de milieu, la sortie de milieu étant formée par un orifice de sortie (50) dans sensiblement chaque plaque d'échangeur de chaleur (1) de l'ensemble de plaques (2), lesquels orifices de sortie (50) forment l'un parmi un canal composé d'orifices qui s'étend à travers sensiblement l'intégralité de l'ensemble de plaques (2).

18. Échangeur de chaleur à plaques selon l'une quelconque des revendications précédentes, **caractérisé en ce que** sensiblement chaque plaque d'échangeur de chaleur (1) dans la section de séparation (S) comprend au moins un orifice de récupération (51), lequel forme un canal de récupération qui s'étend à travers sensiblement l'intégralité de l'ensemble de plaques (2) et est agencé pour apporter le milieu aux premiers interstices entre plaques (5) de la section de condensation (C).

19. Échangeur de chaleur à plaques selon les revendications 2 et 18, **caractérisé en ce que** sensiblement chaque plaque d'échangeur de chaleur (1) dans la section de séparation (S) comprend au moins deux orifices de récupération (51), lesquels forment un tel canal de récupération respectif, un tel orifice de récupération (51) étant prévu à proximité de chaque bord latéral (7, 8) de chaque plaque d'échangeur de chaleur (1).

20. Échangeur de chaleur à plaques selon l'une quelconque des revendications précédentes, **caractérisé en ce qu'**un joint de guidage (53) est prévu dans chacun des premiers interstices entre plaques (5) et agencé pour délimiter la section de séparation (S) de la section de condensation (C).

21. Échangeur de chaleur à plaques selon les revendications 17 et 20, **caractérisé en ce que** le joint de guidage (53) est en pente vers le bas, en direction du canal composé d'orifices de la sortie de milieu et est agencé pour apporter le milieu condensé de la section de condensation (C) vers la sortie de milieu.

22. Échangeur de chaleur à plaques selon les revendications 19 et 21, **caractérisé en ce que** la sortie de milieu est prévue en une position centrale, le joint de guidage (53) étant en pente vers le bas jusqu'au canal composé d'orifices de la sortie de milieu en partant de deux positions qui sont situées à proximité d'un orifice de récupération respectif parmi lesdits orifices de récupération (51).

23. Échangeur de chaleur à plaques selon l'une quelconque des revendications précédentes, **caractérisé en ce que** l'échangeur de chaleur à plaques est conçu pour apporter le milieu par le biais des seconds interstices entre plaques (6) de la section de condensation (C) avant que le milieu ne soit apporté dans les premiers interstices entre plaques (5) de la section d'évaporation (E), le milieu formant le milieu de refroidissement.
